Europäisches Patentamt

European Patent Office

Office européen des brevets

(11) Publication number: 0 185 098
A1

## EUROPEAN PATENT APPLICATION

published in accordance with Art. 158(3) EPC

(21) Application number: 85902655.1

(22) Date of filing: 29.05.85

Data of the international application taken as a basis:

(86) International application number:
PCT/JP85/00298

(87) International publication number:
WO85/05708 (19.12.85 85/27)

(51) Int. Cl.⁴: G 06 F 13/12

(30) Priority: 01.06.84 JP 110731/84

(43) Date of publication of application:
25.06.86 Bulletin 86/26

(84) Designated Contracting States:
DE FR GB

(71) Applicant: HITACHI, LTD.
6, Kanda Surugadai 4-chome Chiyoda-ku
Tokyo 100(JP)

(72) Inventor: FUNABASHI, Tsuneo
6-20, Kobinata 2-chome
Bunkyo-ku Tokyo 112(JP)

(72) Inventor: IWASAKI, Kazuhiko
1-3, Higashi-koigakubo 3-chome
Kokubunji-shi Tokyo 185(JP)

(72) Inventor: YAMAGUCHI, Noboru
7-1, 508-1, Narabashi 5-chome
Higashi-yamato-shi Tokyo 189(JP)

(72) Inventor: SHIMURA, Takanori
1-3, Higashi-koigakubo 3-chome
Kokubunji-shi Tokyo 185(JP)

(72) Inventor: TATEZAKI, Junichi
Sakamotosou 1469, Jousuihoncho
Kodaira-shi Tokyo 187(JP)

(74) Representative: Patentanwälte Beetz sen. - Beetz jun.
Timpe - Siegfried - Schmitt-Fumian
Steinsdorfstrasse 10
D-8000 München 22(DE)

(54) CONTROL INTEGRATED CIRCUIT.

(57) A control integrated circuit of the invention is based upon a hierarchical processor structure. A microprogram controller (211) is employed for a high-order processor to give sophisticated functions. A plurality of finite-state transition machines (208, 209) are employed for a low-order processor to increase the speed of operation. The control function for an external input/output device is divided and is executed by a plurality of finite-state transition machines (208,209), the performance thereof being controlled by the microprogram controller (211). According to the present invention, a new control function is processed by adding a finite-state transition machine (210). Namely, the invention provides the general structure of an integrated circuit for controlling various input/output devices.

FIG. 2

SPECIFICATION

TITLE OF THE INVENTION:

INTEGRATED CIRCUIT CONTROLLER

[Technical Field]

This invention relates to an integrated circuit controller, and more particularly to an integrated circuit controller which contributes to shorten the time of developing large scale integrated circuits (hereinafter referred to simply as "LSI" for brevity) with a view to realizing various peripheral I/O device controllers.

[Description of the Prior Art]

It is known in the art that an LSI can be designed efficiently in a short time period by the use of the so-called regular logic circuits such as read-only memory (hereinafter referred to simply as "ROM") and a programmable logic array (hereinafter referred to simply as "PLA"). Especially, it is a universal expedient to store a microprogram in ROM thereby to control the circuits in LSI.

Although not related to LSI, Japanese Patent Publication No. 59-4736 discloses a disk drive

- 1 -

controller using the microprogram control, in which the branch control of a microprogram is improved to reduce the program size and to secure compatibility to drives of different types. In this case, however, the microprogram does not execute all of the disk control facility, relying on other logic circuits for control of counters and the like.

Accordingly, the above-mentioned device can cope with connection of disk drives of different types by alteration of the microprogram but it cannot be applied to serial I/O controls other than disk drives, for example, to the communication protocol without entailing a considerable amount of corrections in the logic circuits.

In order to obtain a versatile structure which can be applied to a diversity of peripheral I/O controllers with less alterations, it becomes necessary to incorporate the regular logics in a large extent. In spite of easiness of making alterations in design, the regular logics have a large structure due to existence of redundant circuits and therefore are slow in operation speed. Besides, notwithstanding the higher versatility, the microprogram control which requires more than several steps for performing a predetermined operation lacks ability of real time control.

[Summary of the Invention]

It is an object of the present invention to provide a general purpose integrated circuit which incorporates regular logics in a large extent to facilitate alterations in design but which can be applied to designing of various external I/O controllers of high performance quality.

The integrated circuit of the invention employs a processor hierarchy in LSI to preclude degradations of performance quality which would result from adoption of regular logics in a large extent. Namely, the integrated circuit of the invention employs a microprogram controller as a high-level processor and a finite state machine (hereinafter referred to simply as "state machine") as low-level processors to increase the operation speed. Besides, alterations in design can be made by reprogramming of the controller and state machines, and a connection structure which permits add-on of low-level processors if necessary is employed.

BRIEF DESCRIPTION OF THE DRAWINGS

In the accompanying drawings:

Fig. 1 is a pictorial diagram of a state machine;

Fig. 2 is a pictorial diagram of an LSI controller according to the present invention;

Fig. 3 is a pictorial diagram showing the operation sequence of the LSI of Fig. 2;

Fig. 4 is a pictorial diagram of the internal structure of the state machine; and

Fig. 5 is a layout of the LSI controller according to the invention.

DESCRIPTION OF THE PREFERRED EMBODIMENT

Hereafter, the invention is described more particularly by way of a preferred embodiment.

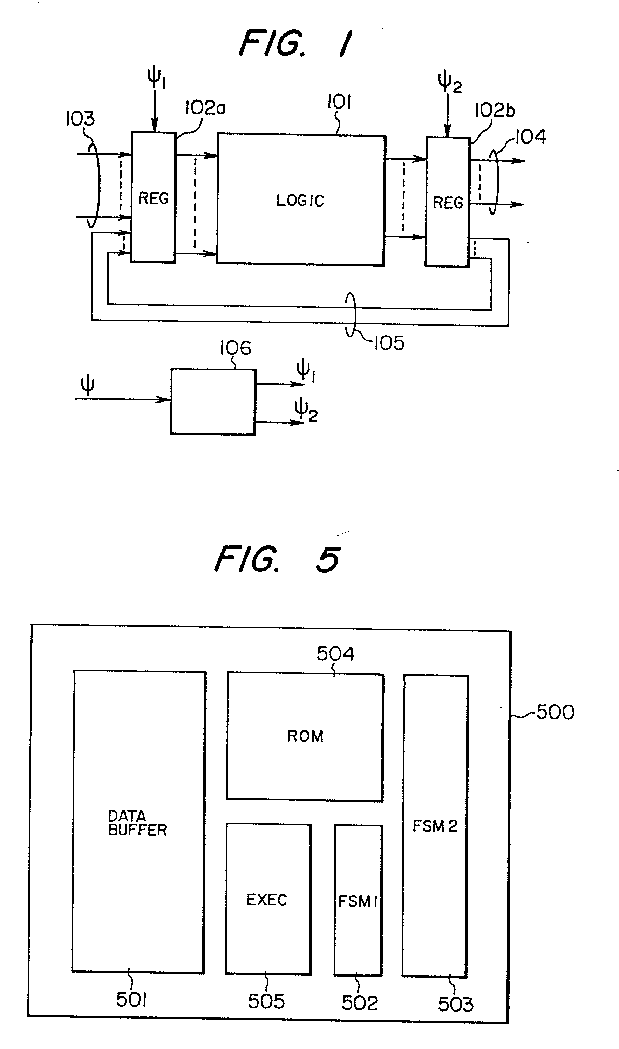

In the finite state machine shown in Fig. 1, the control signals flow through a couple of registers 102a and 102b and a combinational logic circuit 101 between the two registers 102a and 102b. The input 103 and a feed-back signal 105 of the output of the register 102b are fed to the register 102a. The register 102a which is driven by clock $\psi 1$ retains these inputs and sends them to the combinational logic circuit 101. The register 102b which is driven by clock $\psi 2$ stores the output of the combinational logic circuit 101 upon receipt of the clock signal $\psi 2$, producing output partly as control signal output 104 and partly as a "state" or

— 4 —

a feed-back signal 105 to the register 102a.

Normally, the clock signals $\psi 1$ and $\psi 2$ are non-overlapped two phase clock signals which are obtained from a clock generator 106 on the basis of primary clock signal. Therefore, at one cycle time after application of the input 103 to the register 102a, the state in the register 102b changes and the control output 104 is produced. In a case where the clock signals $\psi$ are identical with the clock signals which control the external I/O device, the state machine can be synchronized with the signals from the external I/O device (led to input 103), with a delay of one cycle time in response, so that it is suitable for real time control of an external I/O device. Further, alterations in control functions can be facilitated to a considerable degree by using PLA (programmable logic array) for the combinational logic circuit 101.

However, if a single state machine is applied to the entire external I/O device controller LSI, the numbers of input lines 103 and output lines 104 will have to be increased to a considerable extent in most cases, resulting in a combinational logic circuit 101 of a large size which is incapable of high-speed operation.

Therefore, for controlling an external I/O

- 5 -

device, the present invention employs a number of state machines to realize high speed operation.

More particularly, according to the present invention, PLA is used for the state machines to facilitate alterations in design, and the control functions are separately alloted to and executed by a plural number of state machines. In addition, according to the invention, operation management of a plural number of state machines is performed by a microprogram controller of a higher level from the standpoint of connection structure. The microprogram controller of the present invention has a microprogram stored in ROM (read-only memory) thereby to carry out necessary data processing in addition to the operation management of the state machines for enhancing the controller function.

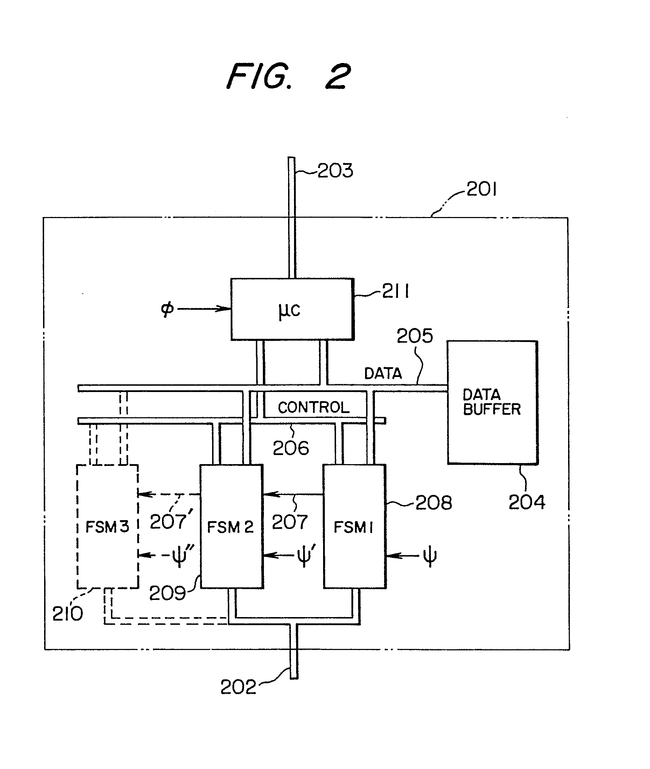

Referring now to Fig. 2, there is illustrated a general structure of the integrated circuit controller according to the invention. The integrated circuit controller 201 (hereinafter referred to simply as "controller LSI") for external I/O device (not shown) is connected to the latter through a signal line 202 and to a computer system or a host machine (not shown) through a signal line 203. The controller LSI controls the

- 6 -

external I/O device according to a command from the host machine, and transfers data between the host machine and external I/O device.

According to the present invention, the structure of Fig. 2 is commonly applied in designing various types of controller LSI for the purpose of shortening the designing time. To this end, the basic universal structure is used in the designing processes of LSIs, e.g., in the processes of logic design, testing and layout design and the like.

The common structure of the invention allots the external I/O device control functions to a plural number of state machines 208 and 209 (FSM1 and FSM2). For addition of a control function, another state machine 210 (FSM3 in the example shown in Fig. 2) is added. In general, the state machine responds to an externally applied input in a period of one cycle of the driving clock, so that it is suitable for high-speed I/O control. If the driving clock of the state machine is in concordance with the driving clock of external I/O device, it becomes possible to provide high-speed control as the response of the state machine can be synchronized with the latter. In a case where the external I/O device is a disk drive or a communication network, the external device is driven by different clocks in transmission and reception. Therefore, the state machine FSM1 for the receive control is operated on a receive clock $\psi$, and the state machine FSM2 for transmission control is operated on a transmission clock $\psi'$.

In a case where there is a large difference in data transfer rate between a host system and an external I/O device in transferring data therebetween or in a case where a host system takes time for preparation of data transfer, a data buffer 204 is provided in the controller LSI. Known random access memory or first-in first-out register is useful for the data buffer circuit.

In order to secure a structure which permits easy addition of a state machine for each control function of the external I/O device, the connection port is normalized in the present invention, while providing a microprogram controller ($\mu$C) 211 which has a function of allocating the start sequences of the state machines. Namely, the present invention employs an on-chip processor hierarchy having $\mu$C211 as a high-level processor and FSM 208 to 210 as low-level processors.

The connection port includes a data path and a control path. The data path employs a known bus
structure 205, while the control path includes three
kinds of signals, i.e., FMS start signal to be sent from
µC through the signal line 206, FSM busy signal to be
sent to µC from a state machine on the signal line 206,
and start signal 207 from one state machine to another
state machine. Looking from the side of the
microprogram controller µC211, a start signal and a busy
signal are addressed in a pair to each of the state
machines 208 to 210.

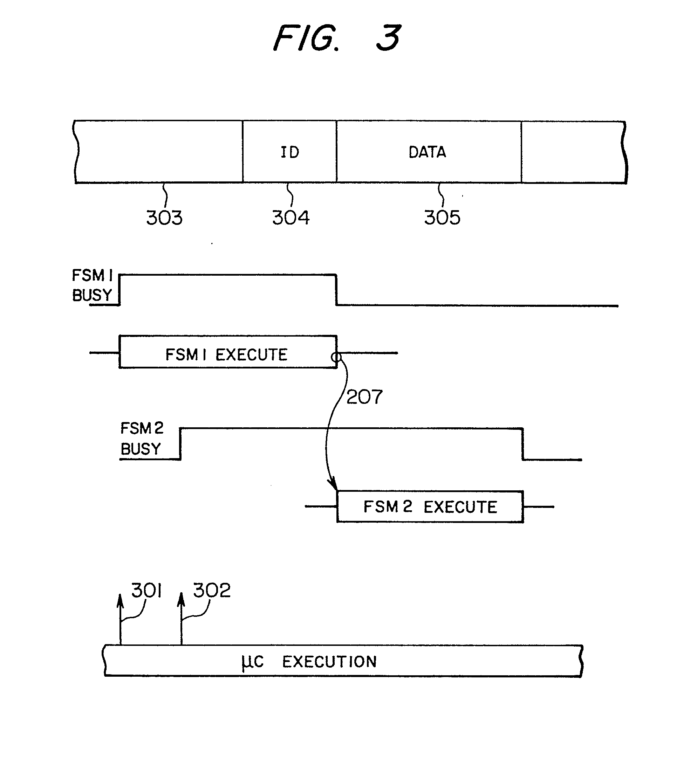

The allocating function of µC211 is now
explained with reference to Fig. 3. The microprogram
controller µC is constituted by a processor including a
known microprogram, a decoder for deciphering the
microprogram and an execution circuit, issuing a command
301 to FSM1 through signal lines 205 and 206. Upon
receipt of the command, FSM1 immediately starts
execution and sets a signal FSM1BUSY which is generated
in FSM1. After confirming by the microprogram function
that FSM1BUSY = 1 and FSM2BUSY = 0, a signal which is
generated in FSM2 (209), µC issues a command 302 to FSM2
in a similar manner. Whereupon, FSM2 sets FSM2BUSY but
does not start execution until it receives a start
signal 207 from FSM1. The data from the external I/O device has a time-series-like structure as indicated at 303, and on initiation of execution FSM1 finds an ID field 304 which identifies a data field. After detection of the ID field, FSM1 makes a judgment as to whether or not the ID field read from the external I/O device is in conformity with an ID information which has been given beforehand by the host system. If the result of judgment is affirmative, FSM1 terminates execution, clears FSM1BUSY, and starts FSM2.

FSM2 transmits the contents of data buffer 204 to the external I/O device in a time period corresponding to the DATA field 305 and in synchronism with the operation of the external I/O device.

In the time-series-wise control of the external I/O device, the control in a certain specific time region is handled by one state machine as described hereinbefore, facilitating the operation management of the state machines by $\mu$C. It is easy to arrange the structure in such a manner as to allocate the state machine starting sequences by $\mu$C, actually starting a state machine by an external I/O device or by another state machine. Further, depending upon circumstances, the state machines can be started directly by $\mu$C. Accordingly, it becomes possible to eliminate mutual interferences of the respective state machines, and facilitates the parallel design of state machines because they may operate independently. It also becomes easy to add a state machine or machines each for an intended function.

More particularly, state machines can be added by the following method. Namely, connection of a state machine is completed simply through a connecting port containing the two signals on the bus lines 205 and 206, and the signal line 207. On the other hand, the microprogram controller µC allocates the state machine starting sequences by issuing a command (e.g., 301) which starts a state machine in non-real time fashion relative to the external I/O device and a real time start command (e.g., 302). In Fig. 3, after issuing the command 302, µC is sensing FSM2BUSY. Accordingly, the above-described structure can control the added state machines simply by supplementing an allocating microprogram.

Since the state machines are driven by the clock signals which are supplied to the external I/O device, they are suitable for synchronized control. However, since the clock ψ of the external I/O device varies depending upon application, it is preferred that

the driving clock $\psi$ of $\mu$C is independent of the clock $\psi$. Therefore, control functions which do not require strict synchronism with $\psi$ or which involve executions of high level are realized by the use of $\mu$C. Examples of such functions include head positioning, data error correction, string search in input data and editing of input data in disk drive control functions.

As a storage means for the microprogram of the above-described $\mu$C, it is conceivable to use random access memory. However, in case of an integrated circuit which is intended for mass production, it is more convenient to store the microprogram in read-only memory (ROM) for eliminating the trouble of program loading and reducing the chip area. The integrated circuit can be remodeled for control of a different type of external I/O device by changing the microprogram in the ROM.

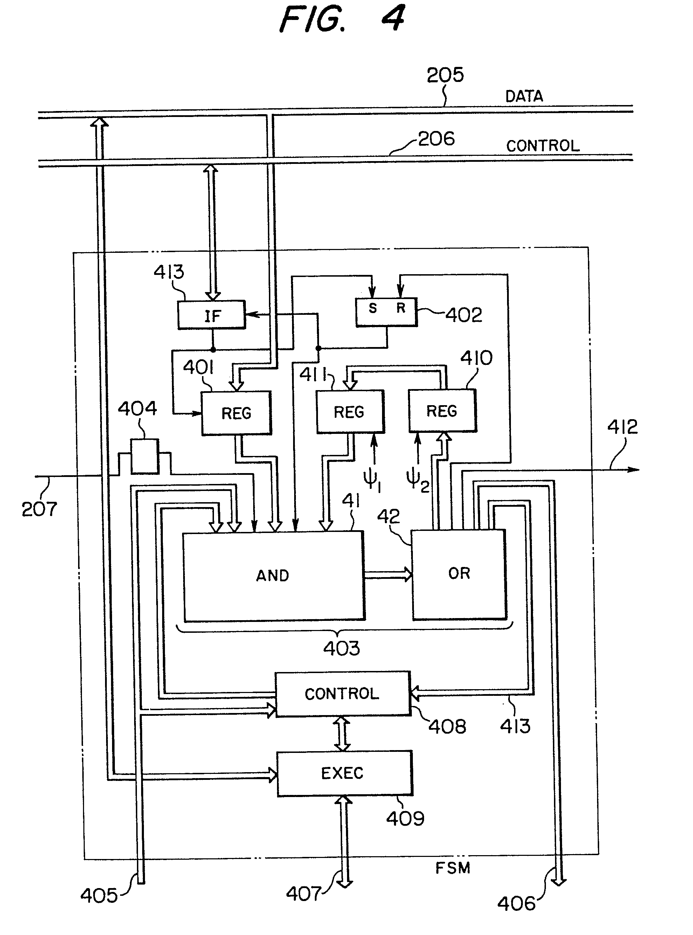

Reference is now had to Fig. 4 for explanation of the internal structure of the state machines. The command from $\mu$C is stored in register (REG) 401 through the data bus 205. At this time, a command issue signal is led to interface (IF) 413 through the signal line 206 to serve as a strobe signal for the register 401 and as a set signal for an R-S flip-flop 402. When the

- 12 -

contents of register 401 are same as the command 301, a programmable logic array (PLA) 403 with AND face 41 and OR face 42 transits its state upon receipt of the output of the flip-flop 402. On the other hand, when the contents of the register 401 are same as the command 302, the transit of state takes place when the output of the flip-flop 402 is ANDed with a start signal 207 of another state machine, which is $\psi$-synchronized by a synchronizing circuit 404, or with a start signal 405 from an external I/O device. The state is retained by master/slave registers (master register 410 and slave register 411). The output of OR plain 42 of PLA partly serves as a start signal 412 for other state machine and partly as an external I/O device control signal 406, and part of output signal 413 is applied to a control circuit 408 in the state machine. This control circuit 408 controls an executing unit 409. The executing unit 409 serves to transfer data between the external I/O device and $\mu C$, or between the external I/O device and a data buffer memory. In a case where the external I/O device is a serial I/O device, for example, the contents of the executing unit 409 include serial/parallel conversion, parallel/serial conversion, detection/generation of specific pattern in input

- 13 -

string, detection/generation of address in data block such as a sector or packet, decode/encode of error detection code, and modulation/demodulation.

The above-mentioned state machine functions are allotted to a couple of state machines, and full duplex communication is feasible by assigning to the executing unit of one state machine the functions of serial/parallel conversion, detection of specific pattern, detection of address, decode of error detection code and demodulation and to the executing unit of the other state machine to functions of parallel/serial conversion, generation of specific pattern, generation of address, encode of error detection code and modulation. In this instance, the former state machine is driven by receive clock of the external I/O device, while the latter state machine is driven by transmit clock.

Shown in Fig. 5 is a layout pattern of the controller LSI according to the invention, which has the data buffer 501 located at one end of the chip since its capacity has to be changed depending upon the data transfer rate of the external I/O device or the like. On the other hand, the state machines 502 and 503 to be added according to the control functions are located at the other end of the chip. The size of ROM 504 which stores the microprogram of µC is increased or reduced depending upon the intended control functions, so that the shape of the FSM which confronts the ROM is changed according to the shape of the ROM to eliminate the wasteful spaces which would otherwise result from changes in the ROM size. The executing circuit 505 of µC is used commonly for all of the controller LSIs without alterations. On the other hand, alterations in part of the state machine functions are realized by changing logics of PLA. It will be appreciated therefrom that manpower reduction is also possible even in the stage of layout design.

As stated hereinbefore, the individual state machines operate independently of each other. Therefore, the function test of a certain state machine by µC using the microprogram control is feasible irrespective of operations of other state machines, and, when a state machine is added, it suffices to add to µC a test program of the added state machine alone. With regard to the contents of test, it is suitable to employ the known scan path method.

It will be appreciated from the foregoing description that the controller LSI according to the

- 15 -

invention has a hierarchical structure including a microprogram controller and state machines, which permits to design controller LSIs for various external I/O devices in a short time period since additional state machines may be provided for additional external I/O control functions. The LSI structure of the invention can be effectively applied to LSI designs such as logic designs, layout designs and testing designs.

WHAT IS CLAIMED FOR PATENT IS:

1. An integrated circuit controller to be connected to an external I/O device, comprising:

a plural number of state machines driven by a clock signal driving said external I/O device as a clock source of the state machine;

a microprogram controller; and

a plural number of connecting ports connecting said state machines with said microprogram controller;

said controller having the functions of (1) reading a signal A indicating whether or not a state machine is busy and (2) issuing a start command to said state machine in response to said signal A to allocate the start sequences of said state machines;

said state machines having part or all of separate functions of (1) transiting the state thereof in response to a start signal B, (2) sending said controller said signal A indicating whether or not busy, and (3) transferring data to and from said controller in synchronism with said external I/O control device; and

said connecting ports consisting of a couple of control signal lines for said signals A and B and a data line for data transfer between said state machines and said controller.

2. The integrated circuit controller of claim 1, wherein the state transit functions of said state machines are realized by a programmable logic array, and the microprogram of said controller is stored in read-only memory.

3. The integrated circuit controller of claim 1, wherein said controller has at least one of functions of starting said state machines by issuing said signal B, controlling said external I/O device in such a manner as to permit off-line data transfer to and from said external I/O device, receiving data from said external I/O device through said state machines and sending same to a computer system after correction or other processing, and receiving data from a computer system and sending same to said external I/O device through said state machines after correction or other processing.

4. The integrated circuit controller of claim 1, wherein said start signal B for starting a state machine is dispatched from said controller, external I/O device or another state machine.

5. The integrated circuit controller of claim 1, wherein said external I/O device is a serial I/O device, a first state machine is driven by receive clock of said serial I/O device, and a second state machine is driven by transmission clock of said serial I/O device, said first state machine having part or all of the functions of receiving and demodulating serial data from said serial I/O device, converting serial data into parallel form, detecting a specific pattern at the head of said serial data and the numbers allotted to succeeding data blocks and decoding error detection codes, and said second state machine having part or all of the functions of encoding error detection codes, generating a specific pattern at the head of serial data and numbers of succeeding data blocks, converting parallel data into serial form and modulating serial data for output to said serial I/O device.

6. The integrated circuit controller of claim 1, wherein a data buffer for temporarily storing data to be transferred between said controller and said state machines is located at one end on one face of an LSI chip, and said state machines are located at the other end, thereby facilitating increases or reductions in the buffer memory capacity as well as addition and deletion of a state machine or machines.

7. The integrated circuit controller of claim 1, wherein said controller has a function of testing logic circuits in said state machines, adding or
increasing testing microprograms according to the number
of increased or deleted state machines.

## FIG. 1

## FIG. 5

# FIG. 2

## FIG. 3

| | ID | DATA | |
|---|---|---|---|

303    304    305

FSM1 BUSY

FSM1 EXECUTE

207

FSM2 BUSY

FSM2 EXECUTE

301    302

μC EXECUTION

# FIG. 4

# INTERNATIONAL SEARCH REPORT

International Application No. PCT/JP85/00298

**0185098**

## I. CLASSIFICATION OF SUBJECT MATTER (If several classification symbols apply, indicate all) [3]

According to International Patent Classification (IPC) or to both National Classification and IPC

Int. Cl$^4$  G06F13/12

## II. FIELDS SEARCHED

| Minimum Documentation Searched [4] | |
|---|---|
| Classification System | Classification Symbols |
| IPC | G06F13/12, G06F9/22 |

| Documentation Searched other than Minimum Documentation to the Extent that such Documents are Included in the Fields Searched [5] |
|---|
| Jitsuyo Shinan Koho          1956 – 1984 |
| Kokai Jitsuyo Shinan Koho    1971 – 1984 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| A | JP, A, 51-40043 (Nippon Telegraph & Telephone Public Corporation) 3 April 1976 (03. 04. 76) (Family : none) | 1 – 7 |
| A | JP, A, 51-98930 (Burroughs Corp.) 31 August 1976 (31. 08. 76) & DE, A1, 2505842 & FR, A1, 2262828 & CA, A1, 1017461 | 1 – 7 |

* Special categories of cited documents: [16]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
|---|---|
| July 31, 1985 (31. 07. 85) | August 12, 1985 (12. 08. 85) |
| International Searching Authority [1] | Signature of Authorized Officer [20] |
| Japanese Patent Office | |

Form PCT/ISA/210 (second sheet) (October 1981)